(19) Europäisches Patentamt
European Patent Office
Office européen des brevets

(11) **EP 2 492 496 B1**

(12) **EUROPÄISCHE PATENTSCHRIFT**

(45) Veröffentlichungstag und Bekanntmachung des Hinweises auf die Patenterteilung:
**08.06.2016 Patentblatt 2016/23**

(51) Int Cl.:
***F03D 1/06*** *(2006.01)*

(21) Anmeldenummer: **11001581.5**

(22) Anmeldetag: **25.02.2011**

(54) **Windenergieanlagenrotorblatt mit variierender Blattiefe**

Wind energy assembly rotor blade with varying blade depth

Pale de rotor d'éolienne dotée d'une profondeur de lame variable

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**29.08.2012 Patentblatt 2012/35**

(73) Patentinhaber: **Nordex Energy GmbH**
**22848 Norderstedt (DE)**

(72) Erfinder: **Fischer, Gunther Reinald**
**22081 Hamburg (DE)**

(74) Vertreter: **Hauck Patentanwaltspartnerschaft mbB**
**Postfach 11 31 53**
**20431 Hamburg (DE)**

(56) Entgegenhaltungen:
**WO-A1-2006/090215      WO-A2-2010/033018**
**DE-U1- 29 912 737      JP-A- 2005 315 094**
**JP-A- 2008 232 141**

• **HAU ERICH ED - HAU E: "Windkraftanlagen, Ausgefuehrte Rotorblattformen", 1. Januar 1996 (1996-01-01), WINDKRAFTANLAGEN. GRUNDLAGEN, TECHNIK, EINSATZ, WIRTSCHAFTLICHKEIT, BERLIN : SPRINGER, DE, PAGE(S) 113 - 118, XP002174275, ISBN: 978-3-540-57430-9 * das ganze Dokument ***

EP 2 492 496 B1

**Beschreibung**

Die Erfindung betrifft ein Windenergieanlagenrotorblatt mit einer Blattwurzel, einer Blattspitze und einer über die Länge des Rotorblatts variierenden Blatttiefe, die an einer Längsposition zwischen der Blattwurzel und der Blattspitze eine maximale Blatttiefe erreicht.

Die vom Rotor einer Windenergieanlage aus dem Wind aufgenommene Leistung hängt von den aerodynamischen Eigenschaften der Rotorblätter ab. Von Bedeutung sind unter anderem deren aerodynamisches Profil, der Anstellwinkel, die relative Blattdicke und die Blatttiefe des Rotorblatts. Ein theoretisch optimaler Verlauf der Blatttiefe kann auf Grundlage der Betzschen Impulstheorie und unter einer Reihe von vereinfachenden Annahmen gefunden werden. Auf diese Weise erhält man den folgenden Zusammenhang für die optimale örtliche Blatttiefe:

$$t_{opt} = \frac{2\pi}{z} \; \frac{8}{9c_A} \; \frac{v_{WA}}{\lambda v_r * r}$$

mit:

$t_{opt}$ = optimale örtliche Blatttiefe (m)
$v_{WA}$ = Auslegungswindgeschwindigkeit (m/s)
$u$ = Umfangsgeschwindigkeit (ms/s)

$v_r = \sqrt{v_w^2 + u^2}$ örtliche resultierende Anströmgeschwindigkeit (m/s)

$v_w$ = Windgeschwindigkeit (m/s)
$\lambda$ = örtliche Schnelllaufzahl (-)
$c_A$ = örtlicher Auftriebsbeiwert (-)
$r$ = örtlicher Blattradius (m)
$z$ = Blattzahl des Rotors (-)

Man erkennt die 1/r-Abhängigkeit der optimalen Blatttiefe, derzufolge sich die Blatttiefe von außen nach innen vergrößert und an der Nabe unendlich wird. Ein solcher Verlauf ist in der Praxis nicht möglich, stellt jedoch ein Ausgangspunkt für die Entwicklung von Rotorblättern dar. Darüber hinaus müssen Festigkeitsanforderungen und komplexe konstruktive Überlegungen einfließen. Im Ergebnis weisen herkömmliche Rotorblätter in der Regel eine Blatttiefe auf, die von der Blattwurzel in Richtung zur Blattspitze hin zunächst zunimmt, an einer Längsposition zwischen der Blattwurzel und der Blattspitze eine maximale Blatttiefe erreicht und von dort aus zur Blattspitze hin annähernd linear oder mit einem leicht hyperbolischen oder konkaven Verlauf abnimmt.

Aus der Druckschrift WO 2006/090215 A1 ist ein Rotorblatt bekannt geworden, das eine relativ geringe Solidität aufweist, d.h. eine geringe Blatttiefe. Wie sich aus den in der Druckschrift beschriebenen Beispielen und den an unterschiedlichen Radiuspositionen geforderten Soliditäten ergibt, weicht der relative Verlauf der Blatttiefe jedoch nicht wesentlich von anderen bekannten Rotorblättern ab.

Aus der Druckschift JP 2005 315094 ist ein weiteres Rotorblatt mit geringer Solidität bekannt.

Davon ausgehend ist es die Aufgabe der Erfindung, ein Windenergieanlagenrotorblatt mit einer Blattwurzel, einer Blattspitze und einer über die Länge des Rotorblatts variierenden Blatttiefe, die an einer Längsposition zwischen der Blattwurzel und der Blattspitze eine maximale Blatttiefe erreicht, zur Verfügung zu stellen, das einen besseren Kompromiss zwischen den im Betrieb auftretenden mechanischen Belastungen und der aus dem Wind aufgenommenen Leistung bietet.

Diese Aufgabe wird gelöst durch das Windenergieanlagenrotorblatt mit den Merkmalen des Anspruchs 1. Vorteilhafte Ausgestaltungen sind in den sich anschließenden Unteransprüchen angegeben.

Das Windenergieanlagenrotorblatt hat eine Blattwurzel, eine Blattspitze und eine über die Länge des Rotorblatts variierende Blatttiefe, die an einer Längsposition zwischen der Blattwurzel und der Blattspitze eine maximale Blatttiefe erreicht, wobei die Blatttiefe in einem äußeren Längsabschnitt, der sich über eine Länge von 20 % oder mehr der Blattlänge erstreckt, im Bereich von 20 % bis 30 % der maximalen Blatttiefe liegt. Mit anderen Worten zeichnet sich das erfindungsgemäße Windenergieanlagenrotorblatt durch einen äußeren Längsabschnitt aus, in dem die Blatttiefe im Vergleich zu herkömmlichen Rotorblättern weniger stark variiert bzw. annähernd konstant bleibt. Die Blatttiefe weicht damit in dem äußeren Längsabschnitt stärker von dem theoretisch optimalen Verlauf ab als üblich. Außerdem ist die Blatttiefe in dem gesamten äußeren Längsabschnitt im Vergleich zu herkömmlichen Rotorblättern relativ gering.

Das Merkmal, dass es sich bei dem Längsabschnitt um einen äußeren Längsabschnitt handelt, bedeutet, dass sich der Längsabschnitt in einem Abstand von der Blattwurzel befindet, also bezogen auf eine Rotorachse radial relativ weit außen liegt. Der Abstand des äußeren Längsabschnitts zur Blattwurzel kann beispielsweise 30 % oder mehr, 40 % oder mehr, 50 % oder mehr, 60 % oder mehr oder 70 % oder mehr der Blattlänge betragen. Zwischen dem äußeren Längsabschnitt und der Blattspitze kann ebenfalls ein Abstand bestehen.

Die maximale Blatttiefe kann an einer einzigen, bestimmten Längsposition vorliegen, von der ausgehend sich die Blatttiefe in beide Richtungen verringert. Die maximale Blatttiefe kann jedoch auch über einen bestimmten Längsabschnitt vorliegen, in dem die Blatttiefe konstant bleibt. Mit der Blattlänge ist stets die Gesamtlänge des Rotorblatts, von der Blattwurzel bis zur Blattspitze, gemeint.

Berechnungen haben ergeben, dass durch den erfindungsgemäß ausgebildeten äußeren Längsabschnitt geringere mechanische Belastungen auftreten, insbesondere im Falle extremer Böen, da die Lastverteilung nach innen verschoben wird. Daher kann, ohne dass insgesamt größere mechanische Belastungen auftreten, die Blattlänge vergrößert werden, was mögliche Leistungseinbußen durch den vom Optimum abweichenden Blatttiefenverlauf überkompensiert. Insgesamt können durch die erfmdungsgemäße Ausgestaltung des äußeren Längsabschnitts Rotorblätter gleicher Länge zur Verfügung gestellt werden, die geringere mechanische Belastungen ausüben, oder die bei gleichen mechanischen Belastungen unter Verwendung einer größeren Blattlänge eine höhere Leistungsaufnahme ermöglichen. Des Weiteren werden durch die erwähnte Ausgestaltung die dynamischen Lasten im Betrieb verringert, da der Massenschwerpunkt in Richtung der Blattwurzel verschoben wird. Dies reduziert die für den Blattanschluss dimensionierenden Betriebslasten.

Ein weiterer Vorteil besteht darin, dass wegen der geringeren Blatttiefe in dem äußeren Längsabschnitt kleinere Beulfelder als bei einem herkömmlich geformten Rotorblatt vorhanden sind und hierdurch zusätzlich Kernmaterial eingespart werden kann. Dadurch verringert sich die Masse des Rotorblatts, was die auftretenden mechanischen Belastungen weiter verringert. Die reduzierten mechanischen Belastungen kommen insbesondere in verringerten Biegemomenten an der Blattwurzel zum Ausdruck. Wegen der geringen Blatttiefe im äußeren Längsabschnitt ist es darüber hinaus möglich, das Rotorblatt mit einer höheren Schnelllaufzahl zu betreiben. Dies kann die Belastungen des Antriebsstrangs im Teillastbereich verringern.

In Ausgestaltungen der Erfindung liegt die Blatttiefe in dem äußeren Längsabschnitt im Bereich von 22 % bis 30 % oder im Bereich von 22 % bis 28 % der maximalen Blatttiefe. Demnach weist der äußere Längsabschnitt einen noch gleichmäßigeren Verlauf der Blatttiefe auf. Hierdurch werden die geschilderten Vorteile der Erfindung in noch höherem Maße erzielt.

In weiteren Ausgestaltungen erstreckt sich der äußere Längsabschnitt über eine Länge von 25 % oder mehr der Blattlänge oder über eine Länge von 28 % oder mehr der Blattlänge. Auch dies kann die geschilderten vorteilhaften Effekte verstärken.

Bei der Erfindung variiert die relative Blattdicke im Bereich des äußeren Längsabschnitts und ist am blattwurzelseitigen Ende des äußeren Längsabschnitts größer als am blattspitzenseitigen Ende des äußeren Längsabschnitts. Die relative Blattdicke ist das Verhältnis aus Blattdicke und Blatttiefe. Bei herkömmlichen Rotorblättern ist die relative Blattdicke in einem äußeren Bereich in der Regel im Wesentlichen konstant und beträgt häufig ungefähr 18 %. Bei der Erfindung vergrößert sich die relative Blattdicke zum blattwurzelseitigen Ende des äußeren Längsabschnitts hin, bei annähernd gleichbleibender Blatttiefe. Im Vergleich zu einem herkömmlichen Rotorblatt wird durch das Verkleinern der Blatttiefe in dem äußeren Längsabschnitt zum blattwurzelseitigen Ende des äußeren Längsabschnitts hin eine trotz annähernd unveränderter absoluter Blattdicke größere relative Blattdicke erreicht. Dadurch muss die Höhe eines dem Windenergieanlagenrotorblatt seine Festigkeit verleihenden Biegetorsionskastens gegenüber einem herkömmlichen Windenergieanlagenrotorblatt nicht oder nicht wesentlich verringert werden. Es kann daher eine ausreichende Festigkeit erreicht werden, ohne durchgreifende konstruktive Änderungen der Tragstruktur des Windenergieanlagenrotorblatts vorzunehmen.

In einer Ausgestaltung ist die relative Blattdicke am blattwurzelseitigen Ende des äußeren Längsabschnitts um 10 % oder mehr größer als am blattspitzenseitigen Ende des äußeren Längsabschnitts. Versuche haben ergeben, dass selbst eine um 10 % oder mehr, beispielsweise um 30 % größere relative Blattdicke die aerodynamische Leistungsfähigkeit nicht wesentlich verringert. Es überwiegen daher die geschilderten positiven Effekte auf die erzielbare Festigkeit des Rotorblatts.

In einer Ausgestaltung nimmt die Blatttiefe in einem mittleren Längsabschnitt, der sich über 30 % oder weniger der Blattlänge erstreckt, von 80 % oder mehr der maximalen Blatttiefe auf 40 % oder weniger der maximalen Blatttiefe ab. Der mittlere Längsabschnitt ist sowohl von der Blattwurzel als auch von der Blattspitze beabstandet. Der Abstand des mittleren Längsabschnitts von der Blattwurzel kann beispielsweise 20 % oder mehr, bevorzugt 30 % oder mehr der Blattlänge betragen. Der Abstand des mittleren Längsabschnitts von der Blattspitze kann beispielsweise 20 % oder mehr, 30 % oder mehr oder 40 % oder mehr der Blattlänge betragen. In dem mittleren Längsabschnitt erfolgt ein verglichen mit dem Blatttiefenverlauf herkömmlicher Rotorblätter relativ schneller Wechsel der Blatttiefe. Dieser schnelle Übergang bedeutet, dass das im äußeren Längsabschnitt relativ schmale Rotorblatt innerhalb eines relativ kurzen Längsabschnitts in einen relativ breiten, inneren Längsabschnitt übergeht. Dieser relativ abrupte Übergang weicht vom herkömmlichen Blatttiefenverlauf ab und führt dazu, dass die insgesamt zur Verfügung stehende Blattfläche trotz des relativ schmalen äußeren Längsabschnitts nicht oder nicht wesentlich geringer ausfällt als bei einem herkömmlichen Rotorblatt. Die relativ große Blatttiefe am blattwurzelseitigen Ende des mittleren Längsabschnitts und den sich daran nach innen anschließenden Bereichen des Rotorblatts wirkt sich positiv auf die aufgenommene Leistung aus, erhöht die auftretenden mechanischen Belastungen jedoch nur relativ geringfügig. Versuche haben ergeben, dass der geschilderte schnelle Übergang der Blatttiefe einen optimalen Kompromiss zwischen Leistungsaufnahme und Belastung weiter begünstigt.

Darüber hinaus haben Versuche ergeben, dass die oben genannte Aufgabe ebenfalls gelöst wird durch ein Windenergieanlagenrotorblatt mit einer Blattwurzel, einer Blattspitze und einer über die Länge des Rotorblatts variierenden Blatttiefe, die an einer Längsposition zwischen der Blattwurzel und der Blattspitze eine maximale Blatttiefe erreicht, wobei sich die Blatttiefe in einem mittleren Längsabschnitt, der sich über 30 % oder weniger der Blattlänge erstreckt, von 80 % oder mehr der maximalen Blatttiefe auf 40 % oder weniger der maximalen Blatttiefe abnimmt. Diese Merkmalskombination ist also auch unabhängig von der besonderen Gestaltung des äußeren Längsabschnitts sinnvoll.

In weiteren Ausgestaltungen nimmt die Blatttiefe in dem mittleren Längsabschnitt von 80 % oder mehr der maximalen Blatttiefe auf 40 % oder weniger der maximalen Blatttiefe ab, und/oder die Blatttiefe nimmt in dem mittleren Längsabschnitt auf 35 % oder weniger der maximalen Blatttiefe ab und/oder die Blatttiefe nimmt in dem mittleren Längsabschnitt auf 30 % oder weniger der maximalen Blatttiefe ab. In weiteren Ausgestaltungen erstreckt sich der mittlere Längsabschnitt über 25 % oder weniger der Blattlänge oder über 20 % oder weniger der Blattlänge. All diese Ausgestaltungen können die geschilderten positiven Effekte des relativ zügigen Übergangs der Blatttiefe in dem mittleren Längsabschnitt verstärken.

In einer Ausgestaltung ist die Blatttiefe in einem inneren Längsabschnitt, der sich über 20 % oder mehr der Blattlänge erstreckt, größer als 88 % der maximalen Blatttiefe. Mit anderen Worten ist die Blatttiefe in dem inneren Längsabschnitt durchgehend relativ groß und im Vergleich zu herkömmlichen Rotorblättern im Wesentlichen konstant. Hierdurch wird die Leistungsaufnahme im inneren Längsabschnitt verbessert, ohne hierzu die absolute Blatttiefe wesentlich vergrößern zu müssen. Das Merkmal, dass es sich bei dem Längsabschnitt um einen inneren Längsabschnitt handelt, bedeutet, dass der Längsabschnitt sich in einem relativ großen Abstand von der Blattspitze befindet. Dieser kann beispielsweise 50% oder mehr, 60 % oder mehr oder 70 % oder mehr der Blattlänge betragen.

Versuche haben ergeben, dass auch diese Ausgestaltung, d.h. die genannte Blatttiefe in dem inneren Längsabschnitt, unabhängig von der geschilderten Ausgestaltung eines äußeren und/oder mittleren Längsabschnitts sinnvoll ist und zur Lösung der oben genannten Aufgabe geeignet ist. Die Aufgabe wird demnach ebenfalls gelöst durch ein Windenergieanlagenrotorblatt mit einer Blattwurzel, einer Blattspitze und einer über die Länge des Rotorblatts variierenden Blatttiefe, die an einer Längsposition zwischen der Blattwurzel und der Blattspitze eine maximale Blatttiefe erreicht, wobei die Blatttiefe in einem inneren Längsabschnitt des Rotorblatts, der sich über 20 % oder mehr der Blattlänge erstreckt, größer ist als 88 % der maximalen Blatttiefe.

In einer Ausgestaltung überlappen sich der äußere Längsabschnitt, der mittlere Längsabschnitt und/oder der innere Längsabschnitt nicht. Die genannten Längsabschnitte können sich zudem unmittelbar aneinander anschließen oder sich in einem Abstand voneinander befinden. Das Rotorblatt ist also klar in die mehreren Längsabschnitte, denen jeweils eine bestimmte Funktion zukommt, gegliedert.

Die Erfindung wird nachfolgend anhand eines in Figuren dargestellten Ausführungsbeispiels näher erläutert. Es zeigen:

Fig. 1 ein erfindungsgemäßes Rotorblatt in einer Draufsicht auf die Druckseite,

Fig. 2 ein herkömmliches Rotorblatt in einer Draufsicht auf die Druckseite,

Fig. 3 ein Diagramm zum Verlauf der Blatttiefe, aufgetragen über den normierten Abstand von einer Rotorachse.

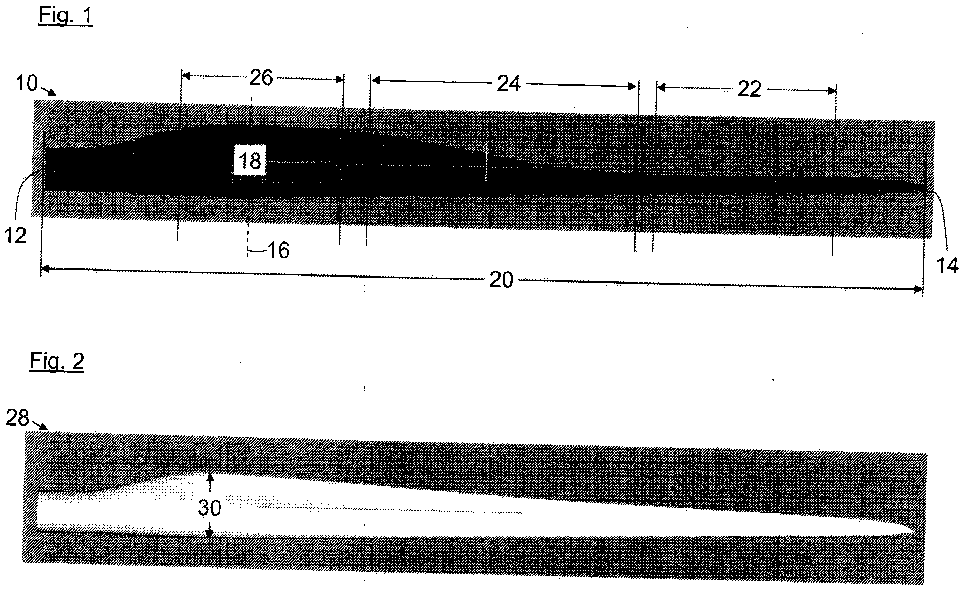

Das in der Figur 1 gezeigte Windenergieanlagenrotorblatt 10 weist eine Blattwurzel 12 und eine Blattspitze 14 auf. An der Blattwurzel 12 hat das Windenergieanlagenrotorblatt 10 einen im Wesentlichen kreisförmigen Querschnitt und ist zur Befestigung an einer nicht dargestellten Rotornabe vorbereitet. Beispielsweise weist es zu diesem Zweck einen in der Figur ebenfalls nicht dargestellten Flansch auf. Der kreisförmige Querschnitt an der Blattwurzel 12 geht mit zunehmendem Abstand von der Blattwurzel 12 in ein aerodynamisches Profil über.

An einer ersten Längsposition 16 hat das Rotorblatt eine maximale Blatttiefe 18. Diese beträgt im dargestellten Ausführungsbeispiel ca. 3,3 m. Die Blattlänge 20 des gezeigten Rotorblatts beträgt ca. 42 m.

In Figur 1 überdies eingezeichnet sind ein äußerer Längsabschnitt 22, ein mittlerer Längsabschnitt 24 und ein innerer Längsabschnitt 26. Der äußere Längsabschnitt 22 erstreckt sich über 20 % oder mehr der Blattlänge 20. Die Blatttiefe liegt in diesem äußeren Längsabschnitt 22 durchgängig im Bereich von 20 % bis 30 % der maximalen Blatttiefe 18.

Der mittlere Längsabschnitt 24 erstreckt sich über 30 % oder weniger der Blattlänge 20. In diesem mittleren Längsabschnitt 24 nimmt die Blatttiefe von 80 % oder mehr der maximalen Blatttiefe 18 am blattwurzelseitigen Ende des mittleren Längsabschnitts 24 auf 40 % oder weniger der maximalen Blatttiefe 18 am blattspitzenseitigen Ende des mittleren Längsabschnitts 24 ab.

Der innere Längsabschnitt 26 erstreckt sich über 20 % oder mehr der Blattlänge 20. In diesem inneren Längsabschnitt 26 ist die Blatttiefe durchgängig größer als 88 % der maximalen Blatttiefe 18.

Der äußere Längsabschnitt 22, der mittlere Längsabschnitt 24 und der innere Längsabschnitt 26 überlappen sich nicht und sind im Beispiel voneinander beabstandet.

Figur 2 zeigt ein herkömmliches Windenergieanlagenrotorblatt 28, das den Ausgangspunkt für die Erfindung bildete, in einer der Figur 1 entsprechenden Ansicht. Der direkte Vergleich zeigt, dass die maximale Blatttiefe 30 geringer ist als die maximale Blatttiefe 18 des erfindungsgemäßen Windenergieanlagenrotorblatts 10. Sie beträgt ca. 3 m. In der Gegenüberstellung der Figuren 1 und 2 ist außerdem ersichtlich, dass der äußere Längsabschnitt 22 des erfindungsgemäßen Windenergieanlagenrotorblatts 10 eine geringere und weniger stark variierende Blatttiefe aufweist als ein entsprechender Längsabschnitt des herkömmlichen Windenergieanlagenrotorblatts 28. Im mittleren Längsabschnitt 24 des erfindungsgemäßen Windenergieanlagenrotorblatts 10 nimmt zudem die Blatttiefe in Richtung zu der Blattspitze 14 hin wesentlich schneller ab als in einem vergleichbaren Längsabschnitt des herkömmlichen Windenergieanlagenrotorblatts 28.

Ebenfalls erkennbar ist, dass der innere Längsabschnitt 26 des erfindungsgemäßen Windenergieanlagenrotorblatts 10 eine gleichmäßigere und größere Blatttiefe aufweist als ein vergleichbar angeordneter Längsabschnitt des herkömmlichen Windenergieanlagenrotorblatts 28.

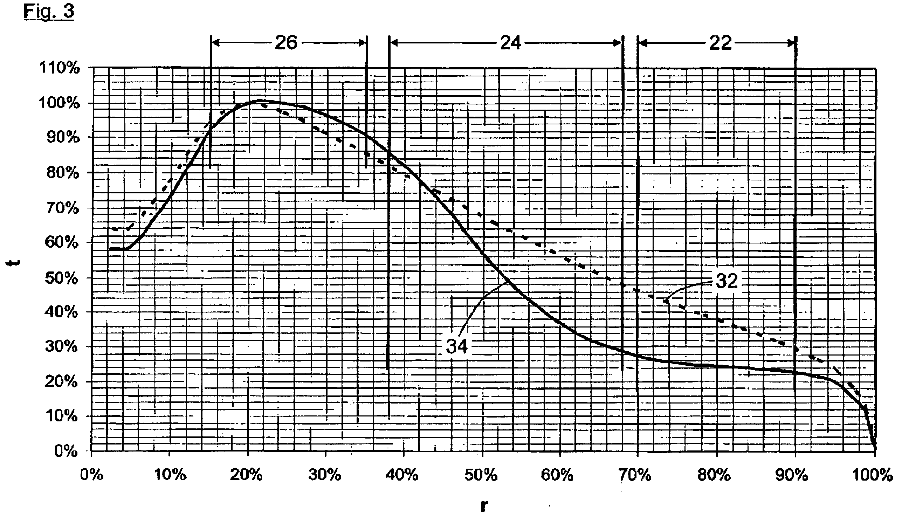

In der Figur 3 ist die relative Blatttiefe *t* über den Radius *r* aufgetragen, und zwar in der gestrichelten Kurve 32 für das herkömmliche Windenergieanlagenrotorblatt 28 aus Figur 2 und in der durchgezogenen Kurve 34 für das erfindungsgemäße Windenergieanlagenrotorblatt 10 aus Figur 1. Die Blatttiefe ist auf 100 % normiert dargestellt, d.h. für die Kurve 32 bezogen auf die maximale Blatttiefe 30 des Windenergieanlagenrotorblatts 28 und für die Kurve 34 bezogen auf die maximale Blatttiefe 18 des Windenergieanlagenrotorblatts 10. Auf der x-Achse aufgetragen ist die jeweilige Längsposition entlang der Blattlänge, und zwar bezogen auf den Abstand von einer Rotorachse und normiert. 100 % entsprechen der radialen Position der jeweiligen Blattspitze. Da die Blattwurzel 12 des Windenergieanlagenrotorblatts 28 sich in relativ geringem Abstand von der Rotorachse von ca. 1 m befindet, entspricht die Prozentskala auf der X-Achse im Wesentlichen der prozentualen Position bezogen auf 100 % der Blattlänge.

In der Figur 3 eingezeichnet sind die Positionen der drei Längsabschnitte 22, 24 und 26. Der äußere Längsabschnitt 22 erstreckt sich von einer radialen Position von ungefähr 70 % der Blattlänge bis zu einer radialen Position von ungefähr 90 % der Blattlänge. Innerhalb dieses äußeren Längsabschnittes 22 nimmt die Blatttiefe von einem Wert von 28 % auf einen Wert von 22 % ab.

Der mittlere Längsabschnitt 24 erstreckt sich von einer Radiusposition von 38% bis zu einer Radiusposition von 68%. Innerhalb dieses mittleren Längsabschnitts 24 verringert sich die Blatttiefe von einem Wert von etwa 85 % auf einen Wert von weniger als 30 %.

Der innere Längsabschnitt 26 erstreckt sich von einer Radiusposition von etwa 15% bis zu einer Radiusposition von etwa 35%. Innerhalb dieses inneren Längsabschnitts 28 beträgt die Blatttiefe kontinuierlich mehr als ungefähr 90 % der maximalen Blatttiefe.

Ein Vergleich der beiden Kurven 32 und 34 zeigt, dass das erfindungsgemäße Rotorblatt 10 in dem inneren Längsabschnitt 26 eine größere und gleichmäßigere Blatttiefe aufweist. Im mittleren Längsabschnitt 24 gibt es einen schnelleren Übergang von einer größeren Blatttiefe zu einer wesentlich geringeren Blatttiefe. Im äußeren Längsabschnitt 22 ist die Blatttiefe deutlich geringer als bei dem herkömmlichen Rotorblatt und ändert sich nur wenig.

Wegen der Normierung auf eine Blatttiefe von 100 % ist in der Figur nicht erkennbar, dass die maximale Blatttiefe 18 des Windenergieanlagenrotorblatts 10 um ungefähr 10 % größer ist als die maximale Blatttiefe 30 des Windenergieanlagenrotorblatts 28. Dies hat zur Folge, dass die Gesamtflächen der beiden Windenergieanlagenrotorblätter 10 und 28 im Wesentlichen gleich groß sind. Hierzu trägt auch bei, dass das Windenergieanlagenrotorblatt 10 eine um etwa 2 m größere Gesamtlänge aufweist als das Windenergieanlagenrotorblatt 28. Auch dies ist in der Figur 3 nicht erkennbar, da auch die Blattlänge bzw. der maximale Radius der beiden Windenergieanlagenrotorblätter 10, 28 auf 100 % normiert ist.

Liste der verwendeten Bezugszeichen:

| | |
|---|---|
| 10 | Windenergieanlagenrotorblatt |
| 12 | Blattwurzel |
| 14 | Blattspitze |
| 16 | Längsposition |
| 18 | maximale Blatttiefe |
| 20 | Blattlänge |
| 22 | äußerer Längsabschnitt |
| 24 | mittlerer Längsabschnitt |
| 26 | innerer Längsabschnitt |
| 28 | herkömmliches Windenergieanlagenrotorblatt |
| 30 | maximale Blatttiefe |
| 32 | gestrichelte Kurve |
| 34 | durchgezogene Kurve |

**Patentansprüche**

1. Windenergieanlagenrotorblatt (10) mit einer Blattwurzel (12), einer Blattspitze (14) und einer über die Länge des Rotorblatts variierenden Blatttiefe, die an einer Längsposition (16) zwischen der Blattwurzel (12) und der Blattspitze (14) eine maximale Blatttiefe (18) erreicht, **dadurch gekennzeichnet, dass** die Blatttiefe in einem äußeren Längsabschnitt (22), der sich über eine Länge von 20 % oder mehr der Blattlänge (20) erstreckt, im Bereich von 20 % bis 30 % der maximalen Blatttiefe (18) liegt und die relative Blattdicke im Bereich des äußeren Längsabschnitts (22) variiert und am blattwurzelseitigen Ende des äußeren Längsabschnitts (22) größer ist als am blattspitzenseitigen Ende des äußeren Längsabschnitts (22).

2. Windenergieanlagenrotorblatt (10) nach Anspruch 1, **dadurch gekennzeichnet, dass** die Blatttiefe in dem äußeren Längsabschnitt (22) im Bereich von 22 % bis 30 % der maximalen Blatttiefe (18) liegt.

3. Windenergieanlagenrotorblatt (10) nach Anspruch 1, **dadurch gekennzeichnet, dass** die Blatttiefe in dem äußeren Längsabschnitt (22) im Bereich von 22 % bis 28 % der maximalen Blatttiefe (18) liegt.

4. Windenergieanlagenrotorblatt (10) nach einem der Ansprüche 1 bis 3, **dadurch gekennzeichnet, dass** sich der äußere Längsabschnitt (22) über eine Länge von 25 % oder mehr der Blattlänge (20) erstreckt.

5. Windenergieanlagenrotorblatt (10) nach einem der Ansprüche 1 bis 3, **dadurch gekennzeichnet, dass** sich der äußere Längsabschnitt (22) über eine Länge von 28 % oder mehr der Blattlänge (20) erstreckt.

6. Windenergieanlagenrotorblatt (10) nach einem der Ansprüche 1 bis 5, **dadurch gekennzeichnet, dass** die relative Blattdicke am blattwurzelseitigen Ende des äußeren Längsabschnitts (22) um 10 % oder mehr größer ist als am blattspitzenseitigen Ende des äußeren Längsabschnitts (22).

7. Windenergieanlagenrotorblatt (10) nach einem der Ansprüche 1 bis 6, **dadurch gekennzeichnet, dass** die Blatttiefe in einem mittleren Längsabschnitt (24), der sich über 30 % oder weniger der Blattlänge (20) erstreckt, von 80 % oder mehr der maximalen Blatttiefe (18) auf 40 % oder weniger der maximalen Blatttiefe (18) abnimmt.

8. Windenergieanlagenrotorblatt (10) nach einem der Ansprüche 1 bis 6, **dadurch gekennzeichnet, dass** die Blatttiefe in dem mittleren Längsabschnitt (24) von 85 % oder mehr der maximalen Blatttiefe (18) auf 40 % oder weniger der maximalen Blatttiefe (18) abnimmt.

9. Windenergieanlagenrotorblatt (10) nach einem der Ansprüche 1 bis 8, **dadurch gekennzeichnet, dass** die Blatttiefe in dem mittleren Längsabschnitt (24) auf 35 % oder weniger der maximalen Blatttiefe (18) abnimmt.

10. Windenergieanlagenrotorblatt (10) nach einem der Ansprüche 1 bis 8, **dadurch gekennzeichnet, dass** die Blatttiefe in dem mittleren Längsabschnitt (24) auf 30 % oder weniger der maximalen Blatttiefe (18) abnimmt.

11. Windenergieanlagenrotorblatt (10) nach einem der Ansprüche 7 bis 10, **dadurch gekennzeichnet, dass** sich der mittlere Längsabschnitt (24) über 25 % oder weniger der Blattlänge (20) erstreckt.

12. Windenergieanlagenrotorblatt (10) nach einem der Ansprüche 7 bis 10, **dadurch gekennzeichnet, dass** sich der mittlere Längsabschnitt (24) über 20 % oder weniger der Blattlänge (20) erstreckt.

13. Windenergieanlagenrotorblatt (10) nach einem der Ansprüche 1 bis 12, **dadurch gekennzeichnet, dass** die Blatttiefe in einem inneren Längsabschnitt (26) des Rotorblatts (10), der sich über 20 % oder mehr der Blattlänge (20) erstreckt, größer ist als 88 % der maximalen Blatttiefe (18).

14. Windenergieanlagenrotorblatt (10) nach einem der Ansprüche 7 bis 13, **dadurch gekennzeichnet, dass** sich der äußere Längsabschnitt (22), der mittlere Längsabschnitt (24) und/oder der innere Längsabschnitt (26) nicht überlappen.

**Claims**

1. A wind turbine rotor blade (10) with a blade root (12), a blade tip (14) and a blade depth varying over the length of the rotor blade, which achieves a maximum blade depth (18) at a longitudinal position (16) between the blade root (12) and the blade tip (14), **characterized in that** the blade depth in an outer longitudinal section (22), which extends over a length of 20 % or more of the blade length (20), lies in the range from 20 % to 30 % of the maximum blade depth (18) and the relative blade thickness in the vicinity of the outer longitudinal section (22) varies and is greater at the blade root end of the outer longitudinal section (22) than at the blade tip end of the outer longitudinal section (22).

2. The wind turbine rotor blade (10) as claimed in claim 1, **characterized in that** the blade depth in the outer longitudinal section (22) lies in the range from 22 % to 30 % of the maximum blade depth (18).

3. The wind turbine rotor blade (10) as claimed in claim 1, **characterized in that** the blade depth in the outer longitudinal section (22) lies in the range from 22 % to 28 % of the maximum blade depth (18).

4. A wind turbine rotor blade (10) according to one of the claims 1 to 3, **characterized in that** the outer longitudinal section (22) extends over a length of 25 % or more of the blade length (20).

5. A wind turbine rotor blade (10) according to one of the claims 1 to 3, **characterized in that** the outer longitudinal section (22) extends over a length of 28 % or more of the blade length (20).

6. The wind turbine rotor blade (10) according to one of the claims 1 to 5, **characterized in that** the relative blade thickness at the blade root end of the outer longitudinal section (22) is greater by 10 % or more than at the blade tip end of the outer longitudinal section (22).

7. The wind turbine rotor blade (10) according to one of the claims 1 to 6, **characterized in that** the blade depth in a middle longitudinal section (24), which extends over 30 % or less of the blade length (20), decreases from 80 % or more of the maximum blade depth (18) to 40 % or less of the maximum blade depth (18).

8. The wind turbine rotor blade (10) according to one of the claims 1 to 6, **characterized in that** the blade depth in the middle longitudinal section (24) decreases from 85 % or more of the maximum blade depth (18) to 40 % or less of the maximum blade depth (18).

9. The wind turbine rotor blade (10) according to one of the claims 1 to 8, **characterized in that** the blade depth in the middle longitudinal section (24) decreases to 35 % or less of the maximum blade depth (18).

10. The wind turbine rotor blade (10) according to one of the claims 1 to 8, **characterized in that** the blade depth in the middle longitudinal section (24) decreases to 30 % or less of the maximum blade depth (18).

11. The wind turbine rotor blade (10) according to one of the claims 7 to 10, **characterized in that** the middle longitudinal section (24) extends over 25 % or less of the blade length (20).

12. The wind turbine rotor blade (10) according to one of the claims 7 to 10, **characterized in that** the middle longitudinal section (24) extends over 20 % or less of the blade length (20).

13. The wind turbine rotor blade (10) according to one of the claims 1 to 12, **characterized in that** the blade depth in an inner longitudinal section (26) of the rotor blade (10), which extends over 20 % or more of the blade length (20), is greater than 88 % of the maximum blade depth (18).

14. The wind turbine rotor blade (10) according to one of the claims 7 to 13, **characterized in that** the outer longitudinal section (22), the middle longitudinal section (24) and/or the inner longitudinal section (26) do not overlap.

**Revendications**

1. Pale de rotor d'éolienne (10) comportant un pied de pale (12), une pointe de pale (14) et une profondeur de pale qui varie sur la longueur de la pale de rotor, atteignant une profondeur de pale maximale (18) dans une position longitudinale (16) située entre le pied de pale (12) et la pointe de pale (14), **caractérisée en ce que** la profondeur de pale comporte entre 20 % et 30 % de la profondeur de pale maximale (18) dans une section longitudinale externe (22) qui s'étend sur une longueur supérieure ou égale à 20 % de la longueur de pale (20), et **en ce que** l'épaisseur de pale relative varie dans la plage de la section longitudinale externe (22) et est plus grande à l'extrémité côté pied de pale de la section longitudinale externe (22) qu'à l'extrémité côté pointe de pale de la section longitudinale externe (22).

2. Pale de rotor d'éolienne (10) selon la revendication 1, **caractérisée en ce que** la profondeur de pale est comprise entre 22 % et 30 % de la profondeur de pale maximale (18) dans la section longitudinale externe (22).

3. Pale de rotor d'éolienne (10) selon la revendication 1, **caractérisée en ce que** la profondeur de pale est comprise entre 22 % et 28 % de la profondeur de pale maximale (18) dans la section longitudinale externe (22).

4. Pale de rotor d'éolienne (10) selon l'une des revendications 1 à 3, **caractérisée en ce que** la section longitudinale externe (22) s'étend sur une longueur supérieure ou égale à 25 % de la longueur de pale (20).

5. Pale de rotor d'éolienne (10) selon l'une des revendications 1 à 3, **caractérisée en ce que** la section longitudinale externe (22) s'étend sur une longueur supérieure ou égale à 28 % de la longueur de pale (20).

6. Pale de rotor d'éolienne (10) selon l'une des revendications 1 à 5, **caractérisée en ce que** l'épaisseur de pale relative à l'extrémité côté pied de pale de la section longitudinale externe (22) est supérieure ou égale de 10 % à celle de l'extrémité côté pointe de pale de la section longitudinale externe (22).

7. Pale de rotor d'éolienne (10) selon l'une des revendications 1 à 6, **caractérisée en ce que** la profondeur de pale dans une section longitudinale médiane (24), qui s'étend sur une longueur inférieure ou égale à 30 % de la longueur de pale (20), diminue d'une valeur supérieure ou égale à 80 % de la profondeur de pale maximale (18) à une valeur inférieure ou égale à 40 % de la profondeur de pale maximale (18).

8. Pale de rotor d'éolienne (10) selon l'une des revendications 1 à 6, **caractérisée en ce que** la profondeur de pale dans la section longitudinale médiane (24) diminue d'une valeur supérieure ou égale à 85 % de la profondeur de pale maximale (18) à une valeur inférieure ou égale à 40 % de la profondeur de pale maximale (18).

9. Pale de rotor d'éolienne (10) selon l'une des revendications 1 à 8, **caractérisée en ce que** la profondeur de pale dans la section longitudinale médiane (24) diminue jusqu'à une valeur inférieure ou égale à 35 % de la profondeur de pale maximale (18).

10. Pale de rotor d'éolienne (10) selon l'une des revendications 1 à 8, **caractérisée en ce que** la profondeur de pale dans la section longitudinale médiane (24) diminue jusqu'à une valeur inférieure ou égale à 30 % de la profondeur de pale maximale (18).

11. Pale de rotor d'éolienne (10) selon l'une des revendications 7 à 10, **caractérisée en ce que** la section longitudinale médiane (24) s'étend sur une longueur inférieure ou égale à 25 % de la longueur de pale (20).

12. Pale de rotor d'éolienne (10) selon l'une des revendications 7 à 10, **caractérisée en ce que** la section longitudinale médiane (24) s'étend sur une longueur inférieure ou égale à 20 % de la longueur de pale (20).

13. Pale de rotor d'éolienne (10) selon l'une des revendications 1 à 12, **caractérisée en ce que** la profondeur de pale est supérieure à 88 % de la profondeur de pale maximale (18) dans une section longitudinale interne (26) de la pale de rotor (10) qui s'étend sur une distance supérieure ou égale à 20 % de la longueur de pale (20).

14. Pale de rotor d'éolienne (10) selon l'une des revendications 7 à 13, **caractérisée en ce que** la section longitudinale externe (22), la section longitudinale médiane (24) et/ou la section longitudinale interne (26) ne se chevauchent pas.

EP 2 492 496 B1

9

Fig. 2

30

28

Fig. 1

20

14

16

12

10

22

24

26

18

Fig. 3

**EP 2 492 496 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006090215 A1
- JP 2005315094 A